Europäisches Patentamt

European Patent Office

Office européen des brevets

(11) Publication number: **0 467 277 A1**

# EUROPEAN PATENT APPLICATION

(21) Application number: **91111814.9**

(22) Date of filing: **16.07.91**

(51) Int. Cl.5: **B60C 15/05**, B29D 30/32

(30) Priority: **19.07.90 US 554651**

(43) Date of publication of application:
**22.01.92 Bulletin 92/04**

(84) Designated Contracting States:
**DE ES FR GB IT**

(71) Applicant: **BRIDGESTONE/FIRESTONE, INC.**
**1200 Firestone Parkway**
**Akron, Ohio 44317(US)**

(72) Inventor: **Bohm, George G.A.**
**1212 West Sunset View Drive**
**Akron, Ohio 44313(US)**
Inventor: **Mochel, Virgil D.**
**1804 Wall Road**
**Wadsworth, Ohio 44281(US)**
Inventor: **Freeman, Roy M.**
**5037 Will Drive**
**Akron, Ohio 44319(US)**
Inventor: **Tomaszewski, Walter**
**Bridgecreek Ave. N.W.**
**Canton, Ohio 44718(US)**

(74) Representative: **von Raffay, Vincenz, Dipl.-Ing.**
**et al**
**Patentanwälte Raffay & Fleck Postfach 32 32**
**17**
**W-2000 Hamburg 13(DE)**

(54) **Bead construction for radial pneumatic tires.**

(57) The beads of a pneumatic tire are formed by placing concentric wire rings (18,22) about an end of the carcass ply (16), sandwiching the end of the carcass ply therebetween. The wire rings (18,22) each contain a plurality of congruent wire coils, each lying in a plane parallel to the plane of all other coils, such planes being normal to the axis of rotation of a tire building drum (12) receiving the carcass ply and rings. A bead filler may be provided as a portion of one of the wire rings.

FIG. 2

## Technical Field

The invention herein resides in the art of radial pneumatic tire construction and, more particularly, to a technique and structure for forming beads on such tires.

## Background Art

Tire beads are an integral and vital part of any tire construction. They form the inner periphery of the tire annulus, secure the tire carcass cords, and provide the structure against which the forces of tire inflation and operation are exerted. It has been well known that, during tire construction, the registration of the beads with respect to each other, as well as the radial and axial planes of the tire, must be maintained to assure tire uniformity and concentricity, both axially and radially.

In the conventional tire building of the past, tire carcass cords have been anchored by wrapping the tire ply ends about a composite bead and bead filler, and subsequently laminating or otherwise attaching the ply to itself on the tire sidewall. However, the conventional technique and structure did not provide means to fully lock the body ply cords so that in building, handling, or curing the green tire the cord length between the beads could not change. As a result, the cured tires might exhibit objectionable non-uniformity. Of particular concern are such changes in cord length during expansion of the uncured tire from its original cylindrical shape to its desired toroidal shape.

The structure, dimensional accuracy, and mode of application of beads during tire building significantly impact the uniformity and performance of the resulting tires. In particular, it is important that the carcass ply be firmly and symmetrically tied to both beads during the tire assembly process to avoid any slippage of the cord during expansion of the green tire. The present technique, as mentioned above, can result in an excessive use of ply material, cord slippage, and a bead which may not exhibit a uniform cross section, such resulting from the spiral wrap of the bead wire.

Attempts have been taken to improve the prior art technique of simply wrapping the carcass ply about a bead assembly and onto itself. United Kingdom Patent Application 2179009A teaches two means for attaining ply/bead locking. A first involves winding the rubber-coated wire over the ply, turning the ply over the wire winding, and continuing the winding of the same wire over the turned-up end. The other method entails a mechanical locking of two wires linked with the ply ends during a special ply manufacturing process. Both techniques are complex, not given to a manufacturing environment, fail to provide uniformity of bead cross section, and are difficult, if not impossible, to implement with the precision necessary to attain the desired tire uniformity.

Efforts have also previously been made to generate a helically wound bead wherein end laps are substantially eliminated and wherein the bead is of substantially uniform cross section. Such a structure is presented in copending patent application Serial No. 07/359,010, filed May 30, 1989, for "Offset Wound Helical Bead for Pneumatic Tires," assigned to the assignee of the instant application. That application, though teaching bead wire ring construction, does not teach or suggest the totality of bead formation, locking techniques and structures, or the provision of uniquely configured bead ring assemblies incorporating bead fillers to facilitate the tire building process.

## Disclosure of Invention

In light of the foregoing, it is the first aspect of the invention to provide a radial pneumatic tire in which the bead locks the body ply cords in fixed position during manufacture.

Another aspect of the invention is the provision of a radial pneumatic tire in which the bead maintains radial and lateral concentricity with the tire.

Yet another aspect of the invention is the provision of a radial pneumatic tire in which each of the wires of the bead lies in a plane normal to the axis of rotation of the tire building drum.

Still a further aspect of the invention is the provision of a radial pneumatic tire in which the bead is of consistent cross sectional geometry.

Yet an additional aspect of the invention is the provision of a radial pneumatic tire in which the bead carries a bead filler such that formation of the bead establishes the bead filler as well.

The foregoing, and other aspects of the invention which will become apparent as the detailed description proceeds are achieved by the improvement of the bead assembly in the construction of a pneumatic tire upon a building drum rotatable about an axis, comprising: an inner liner; a carcass ply received upon said inner liner; a first bead ring assembly received upon said carcass ply, an end of said carcass ply being folded over said first bead ring assembly; and a second bead ring assembly received upon said end of said carcass ply, said end of said carcass ply being sandwiched between said first and second bead rings.

Other aspects of the invention are obtained by a method for building a tire bead, comprising: placing an inner liner about a building drum, said drum being rotatable about an axis; placing a carcass ply about said inner liner; placing a first bead ring assembly over an end of said carcass ply; turning said carcass ply end over onto said first bead ring assembly; and placing a second bead ring assembly over said carcass ply end, sandwiching said carcass ply end between said first and second bead ring assemblies and locking it therebetween.

## Brief Description of Drawings

For a complete understanding of the objects, techniques, and structure of the invention, reference should be made to the following detailed description and accompanying drawings wherein:

Fig. 1 is an illustrative view of under the bead components on a tire building drum with the first bead ring in place;

Fig. 2 is an illustrative view of the structure of Fig. 1 showing the second bead ring in place;

Fig. 3, comprising Figs. 3A and 3B, presents front perspective views of the first and second bead rings of the invention;

Fig. 4 is a partial sectional top plan view of a bead ring according to the invention;

Fig. 5, comprising Figs. 5A - 5F, presents front perspective views of various embodiments of the invention, showing the first and second bead rings in engagement with an end of a carcass ply;

Fig. 6, comprising Figs. 6A - 6E, presents front perspective views of various embodiments of the invention, wherein the second ring also serves as a bead filler section; and

Fig. 7, comprising Figs. 7A and 7B, presents embodiments of the invention in which the end of the carcass ply is engaged between lateral side surfaces of the bead rings, and beneath an inner circumferential surface of one of the bead rings.

## Best Mode For Carrying Out The Invention

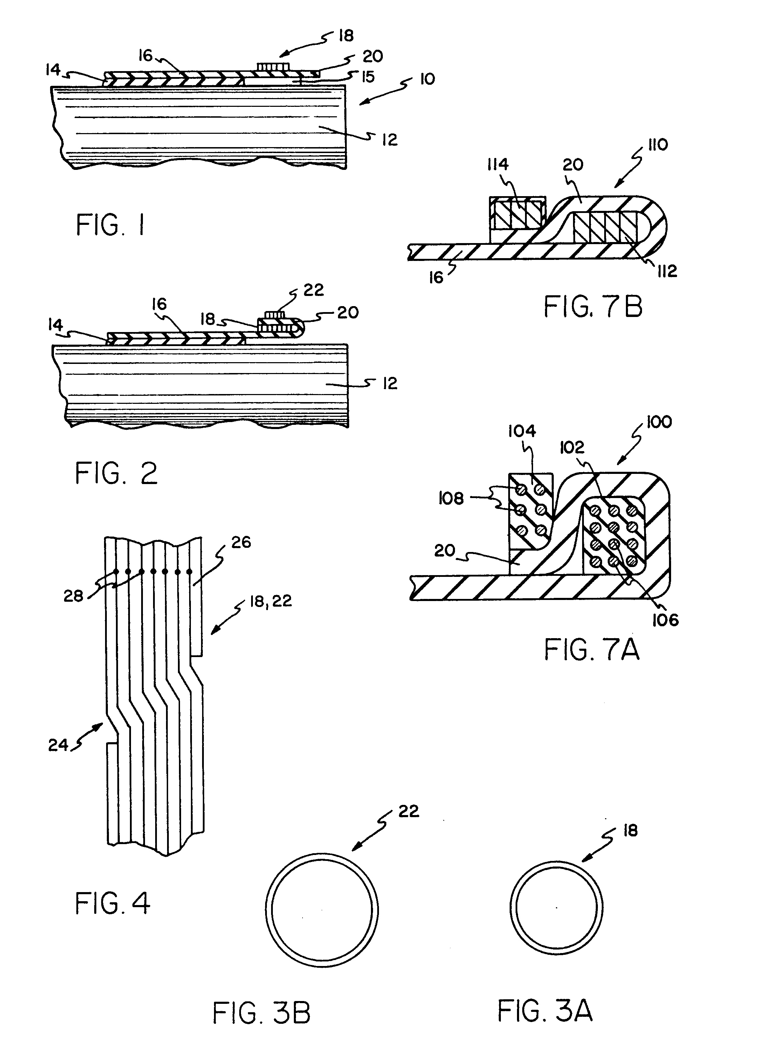

Referring now to the drawings and more particularly, Fig. 1, it can be seen that a tire building drum or apparatus is designated generally by the numeral 10. In standard fashion, a tire building drum 12 is adapted for rotation about a central axis for receipt of the various inner liners, plies, and bead-forming materials thereon. As shown in the drawing, for illustrative purposes only, an inner liner 14 with abrasion gum strip 15 is received upon the drum 12, with a carcass ply 16 received thereon and extending thereover. As will be appreciated by those skilled in the art, the carcass ply typically comprises a composite of rubber with reinforcing cord or appropriate material such as metal, natural, or synthetic fiber. As will also be appreciated by those skilled in the art, the elements 14, 16 are generally referred to in the art as "under the bead components."

Wrapped about the carcass ply 16, and on each end thereof, is a first bead ring assembly 18 of spirally wrapped wires. As shown the bead ring assembly 18 is positioned inwardly of the ply end 20 a distance equal to at least the width of the bead ring assembly 18. While the wires of the bead ring assembly 18 may be wrapped onto the ply, it is preferred that they be previously wound into a composite assembly and be placed as a completed ring over the carcass ply 16 as shown. The details of such ring construction will be presented later herein.

As shown in Fig. 2, the end 20 of the ply 16 is then folded over the top of the first bead ring assembly 18, and a second bead ring assembly 22 is then placed over the composite. The ply end 20 is thus sandwiched between the bead ring assemblies 18, 22, forcefully securing the carcass ply 16 and its reinforcing cords. Of course, the second bead ring assembly 22 may be formed by wrapping wire thereabout, but it is preferred that a wire ring, of a nature to be discussed later, be preformed and forced over the end 20 as shown in Fig. 2. It will, of course, be appreciated that a similar bead arrangement is formed along the opposite edge of the ply 16 to provide for the pair of first and second beads of the resulting tire.

Figs. 3A and 3B present front perspective views of the second bead ring assembly 22 and the first bead ring assembly 18, respectively. As noted, the radius of the second bead ring assembly 22 exceeds that of the first bead ring assembly 18 by the thickness of the ply 16 which is ultimately sandwiched therebetween. Preferably, the difference of the radius between the two is slightly less than the thickness of the ply 16 to assure that the end 20 is compressively maintained therebetween. It is also contemplated that the ring 22 may be formed of wire or other material which will shrink and take a permanent set upon heating during the curing operation to assure a forceful bind between the rings 18, 22 and the end piece 20.

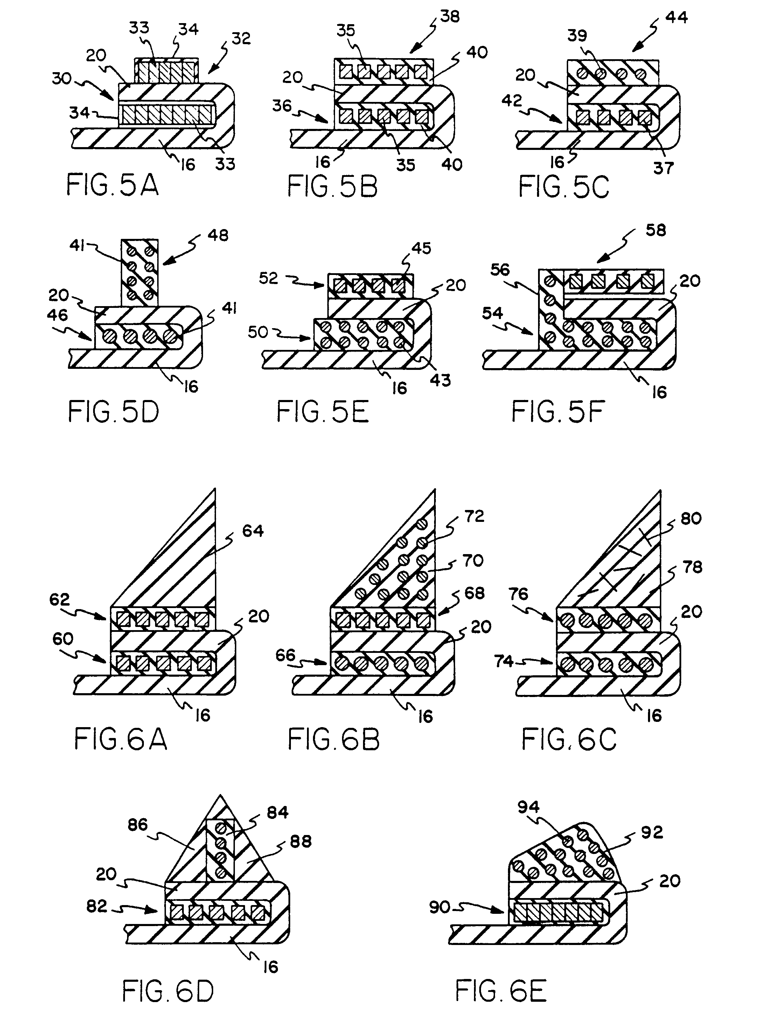

With reference to Fig. 4, it can be seen that the rings 18, 22 may be made from spirally wrapping wire into a coil of fixed diameter, as generally described in the aforementioned copending patent application. The number of wraps or coils will typically be a function of the bead requirements. In order to maintain bead uniformity, it is most desired that each of the concentric rings or coils of the bead ring assemblies 18, 22 lie in a plane which is substantially perpendicular to the rotational axis of the building drum 12. To achieve this, the rings are not formed as a true spiral or helix, as by a continual gradual lateral shift or angling of the wire, but the shifting occurs within a finite zone 24 by an oblique movement of the wire of a ring or coil to the immediately adjacent ring or coil. Further, the ends of the assembly are also maintained in this zone. Accordingly, all of the coils or rings of the assemblies 18, 22 lie in planes parallel to each other, with the planes thereof being normal to the rotational axis of the building drum 12. This assures bead uniformity, and further assures tire uniformity and concentricity.

It will be appreciated that the bead wire 26 may be of various cross sectional geometry such as square, rectangular, circular, hexagonal, or the like. If it is desired, as it is in many cases, that the concentric rings of the assemblies 18, 22 directly abut each other, the oblique transition from one ring to the adjacent ring takes place simply over a path equivalent to the mean width of the wire. If, however, it is desired that the rings be spaced from each other, it will be appreciated that the oblique jog or interconnecting extension transcend a distance greater than such mean width, assuring the desired spacing.

It will also be appreciated that the wire 26 may be of any suitable material, but is preferably made of brass-plated steel such that the congruent rings, which basically form a coil spring, may be secured together as by welding, soldering, or brazing as at 28. Such fixed engagement between the various rings assure proper registration thereof to not only guarantee uniform cross section of the bead, but also proper registration thereof with respect to the carcass ply 16 to assure radial and axial concentricity and uniformity. If desired, the wire of the rings may be coated with rubber either before or after forming of the ring assemblies 18, 22.

Before considering the numerous variations on the basic theme of the invention, an appreciation of the technique of the invention should be attained. It will be appreciated by those skilled in the art that an appropriate inner liner or pre-assembly including an inner liner, chafer, gum strips, and sidewalls are first positioned on the drum 12 using conventional means. In the illustration of Figs. 1 and 2, only an inner liner 14 is shown, although the element 14 could designate the combination of the aforementioned elements. Next, the body or carcass ply or plies 16 are wrapped onto the drum 12, over the inner liner 14, using conventional techniques. A first bead ring assembly 18, is then placed on the drum using conventional means, extending inwardly of the end 20 of the carcass ply 16. The ends 20 of the ply 16 are then folded over the first bead ring assembly 18, again in normal fashion. The second bead ring assembly 22 is then accurately and tightly secured over the turned-up end 20, sandwiching the end 20 between the bead ring assemblies 18, 22. Finally, a bead filler, as is well known in the art, is then applied as by stitching or the like.

With reference to Figs. 5A-5F, it can be seen that the first and second bead ring assemblies may have any of numerous configurations. In Fig. 5A, it is shown that the first ring 30 and second ring 32 are formed from wire 33 of rectangular cross section, with the wires thereof abutted to each other, with the final composite being coated with a rubber coating 34 which is either uncured or preferably precured to a particular degree to facilitate handling. It will also be noted that the number of congruent rings of the second ring 32 is less than that of the first ring 30, although it has been found that the number of rings may be the same depending on bead requirements.

Fig. 5B shows an embodiment of the invention in which the first bead 36 and second bead 38 are formed from wire 35 of rectangular cross section, with the congruent rings thereof being spaced from each other, and in which the rings of the assemblies 36, 38 are imbedded in a rubber encapsulating material 40, such rubber permeating the area between the congruent rings of the assemblies 36, 38.

In Fig. 5C, it is shown that the first bead ring assembly 42 may be formed from wire 37 of rectangular cross section, while the second bead ring assembly 44 may be formed from wire 39 with a circular cross section. In the embodiment of Fig. 5C, the congruent rings are spaced apart and encapsulated with rubber as in Fig. 5B.

In Fig. 5D, the first bead 46 comprises a flat bead which is one wire 41 in thickness, and four wires wide. The second bead ring assembly 48 is erected, resting upon the ply end 20 in a position normal to the width of the first bead ring assembly 46 and having a thickness of five wires and a width of two wires. Effectively, the juncture of the assembly of Fig. 5D forms a "T" interconnect providing an area on either side thereof for an appropriate bead filler.

Fig. 5E shows a first bead assembly 50 of wire 43 of circular cross section and two wires thick, with the second bead 52 being formed from wire 45 of rectangular cross section and having a thickness of a single wire.

Finally, Fig. 5F shows a first bead 54 which includes an abutment 56 extending upwardly therefrom, the abutment 56 having the same height as the thickness of the end 20 of the ply 16. The end 20 adjoins the abutment 56 such that the second bead ring 58 makes contacting and securing engagement not only with the end 20 of the ply 16, but also with inner bead ring assembly 54 via abutment 56. In the embodiment shown, the bead 54 is formed of wire 47 having circular cross section, while the bead ring 58 is formed of wire 49 having rectangular cross section.

It should be appreciated from Fig. 5 that various geometries and configurations of the first and second bead ring assembly can be made in conjunction with the concepts of the invention. The bead wires can be of various cross sectional shapes, retained in place by being soldered, brazed, or cemented to each other. The wires may also be covered with uncured or precured rubber, or can be uncovered. It is most important that the bead ring assemblies are so dimensioned as to tightly secure the lateral edges of the carcass ply therebetween and in perfect registration with each other to assure tire uniformity. The remainder of the tire building concept remains substantially the same as that taught by the prior art.

As mentioned previously, and as is well known in the art, a bead filler of high modulus is typically incorporated with the bead wires to stiffen the lower sidewall region of the tire. Typically, the bead filler comprises a ring of triangular cross section, a leg of which is, according the prior art, stitched to the formed bead. As part and parcel to the instant invention, it is contemplated that the bead filler may be formed as an integral part of the second bead ring assembly such that placement of the second bead ring assembly automatically establishes the requisite filler.

As shown in Figs. 6A-6E, a number of embodiments of the invention are shown incorporating a bead filler structure. In Fig. 6A, first and second bead ring assemblies 60, 62 sandwich the end 20 of the ply 16 as previously stated. Here, however, the second bead ring assembly 62 also has a bead filler ring 64 bonded thereto or molded therewith. Whether the bead filler 64 is generated as a separate element and bonded to the second bead ring assembly 62, or is actually molded as part and parcel thereof, the end result is substantially the same. It will be appreciated that the bead filler may be uncured or precured to a given degree of cure, such facilitating handling in the manufacturing process.

In Fig. 6B, the first and second bead ring assemblies 66, 68 are as previously described, but the second bead ring assembly 68 includes a bead filler 70 bonded, molded, or otherwise appropriately affixed thereto. In this embodiment, the bead filler ring 70 is characterized by a plurality of continuous reinforcing elements such as wires or cords 72 circumferentially passing therethrough. Of course, such reinforcing elements, which may be of any desired configuration, composition, or construction, add to the strength and integrity of the bead filler.

In Fig. 6C, the first and second bead ring assemblies 74, 76 are as previously described, but the bead filler ring 78, bonded or molded to the outer bead ring assembly 76, is characterized by a discontinuous fabric or fiber filler 80 therein for purposes of imparting further strength and integrity to the unit.

Fig. 6D shows an embodiment somewhat like that of Fig. 5D, in which the first bead ring assembly 82 is connected in a "T" arrangement with the second bead ring assembly 84. As shown, however, the second bead ring assembly 84 can include one or more fillers 86, 88 on either or both sides of the ring assembly 84. Again, the filler rings 86, 88 may either be bonded to or molded with the second bead ring assembly 84.

Finally, it should be appreciated that the second bead ring assembly and the bead filler ring may comprise a single homogeneous unit such as shown in Fig. 6E. Here, the first bead ring assembly 90 is similar to those previously identified. The second bead ring assembly 92, however, is presented in a substantially triangular cross section similar to that of a bead filler ring. As previously presented, the second ring assembly 92 is of a high modulus rubber having a plurality of reinforcing bead elements or wire rings 94 passing therethrough. Preferably, the elements or wires 94 are spirally wound and offset according to the technique of Fig. 4 to assure bead uniformity.

With reference now to Figs. 7A and 7B, embodiments of the invention comprising a variation on the basic theme thereof may be seen. In each of these embodiments, the end 20 of the ply 16 is held between lateral, rather than circumferential, surfaces of the bead ring assemblies. The embodiment 100, shown in Fig. 7A, comprises an outer bead ring assembly 102, about which the end of turnup 20 of the carcass ply 16 is wrapped. As shown, the end 20, is brought back upon the carcass ply 16 to overlay the same. An inner bead ring assembly 108 is then brought from the center of the drum 12 to engage the end 20 against both the ply 16 in the horizontal plane, and the bead ring assembly 102 in the vertical plane. Accordingly, securement of the end portion 20 of the carcass ply 16 is attained in orthogonal planes such that as the entire carcass is expanded, the inner bead 104 is forced against the outer bead 102 providing positive locking of the bead assembly and the ply 16.

In the embodiment 100, the outer bead ring assembly 102 comprises a three wire section having four wraps, while the inner bead assembly 104 comprises a two wire section of three wraps. It will be apparent to those skilled in the art that the absence of the fourth wrap in the inner bead ring assembly 104 maintains uniformity of height at the bead 100, allowing the inner bead ring assembly 104 to receive the carcass end 20. It will be appreciated that the inner diameter of the bead ring assembly 104 will be greater than that of the bead ring assembly 102 by a distance substantially equal to twice the thickness of the end 20 of the carcass ply 16. The inner diameter of the bead ring 104 may vary slightly in order to compressively retain the end 20 as described above.

The wires 106 of the bead ring 102 and the wires 108 of the bead ring 104 may also be embedded in a rubber encapsulating material as discussed above.

In Fig. 7B, the embodiment 110 is shown to be substantially similar to the embodiment 100, but for the implementation of an outer bead ring assembly 112 comprising four helically wound wraps of a wire having rectangular cross section, while the inner bead assembly 114 has three such wraps. As with the embodiment of Fig. 7A, the end 20 of the carcass ply 16 is secured in orthogonal planes by the substantial lateral abutment or proximity of the rings 112, 114 and the compressive radial constriction of the inner ring 114 against the overlapped end 20 of the carcass ply 16. As with the embodiment 100, as the entire carcass is expanded, the inner bead 114 is forced against the outer bead 112, providing positive locking of the bead assembly and the ply 16.

It will, of course, be appreciated by those skilled in the art that the manufacture of the embodiments 100, 110 will require the initial placement of the inner bead rings 104, 114 upon the drum 12, prior to placement of the outer bead ring assemblies 102, 112. Accordingly, movement of the inner bead ring assemblies toward the outer bead ring assemblies is achieved from the center of the drum toward the end thereof.

Thus it can be seen that the objects of the invention have been satisfied by the structure and techniques presented above. While in accordance with the patent statutes only the best modes and preferred embodiments of the invention have been presented and described in detail, the invention is not limited thereto or thereby. Accordingly, for an appreciation of the true scope and breadth of the invention reference should be had to the following claims.

**Claims**

1. In the construction of a pneumatic tire upon a tire building drum rotatable about an axis, the improvement of a bead assembly, comprising:
   an inner liner;
   a carcass ply received upon said inner liner;
   a first bead ring assembly received upon said carcass ply, an end of said carcass ply being folded over said first bead ring assembly; and
   a second bead ring assembly received upon said end of said carcass ply, said end of said carcass ply being sandwiched between said first and second bead rings.

2. The improvement in a pneumatic tire according to Claim 1, wherein at least one of said first and second bead ring assemblies comprises a helically wound wire forming a plurality of congruent rings.

3. The improvement in a pneumatic tire according to Claim 2, wherein each of said congruent rings lies in a plane parallel to planes containing others of said congruent rings.

4. The improvement in a pneumatic tire according to Claim 3, wherein each transition of said wire from each of said rings to an adjacent ring occurs in a common zone.

5. The improvement in a pneumatic tire according to Claim 3, wherein said wire is rubber coated.

6. The improvement in a pneumatic tire according to Claim 3, wherein said second ring further comprises a bead filler integral therewith.

7. The improvement of a bead assembly in a pneumatic tire according to Claim 1, wherein said second bead ring assembly is axially displaced from said first bead ring assembly.

8. The improvement of a bead assembly in a pneumatic tire according to Claim 7, wherein said end of said carcass ply is sandwiched between opposed lateral sides of said first and second bead ring assemblies.

9. The improvement of a bead assembly in a pneumatic tire according to Claim 8, wherein said end of said carcass ply is further sandwiched between an inner circumferential surface of said second ring assembly and said carcass ply.

10. A method for building a tire bead, comprising:
    placing an inner liner about a tire building drum, said drum being rotatable about an axis;
    placing a carcass ply about said inner liner;
    placing a first bead ring assembly over an end of said carcass ply;
    turning said carcass ply end over on said first bead ring assembly; and
    placing a second bead ring assembly over said carcass ply end, sandwiching said carcass ply end between said first and second bead ring assemblies and locking it therebetween.

11. The method for building a tire bead according to Claim 10, wherein at least one of said bead ring assemblies comprises a plurality of congruent rings lying in parallel planes, and further comprising the step of placing said one of said bead ring assemblies on said carcass ply and maintaining said planes of said congruent rings normal to said axis.

12. The method for building a tire bead according to Claim 11, further comprising the step of applying a bead filler section to said second bead ring assembly.

13. The method for building a tire according to Claim 10, further comprising the step of forming said first and second bead rings by spirally winding a wire upon itself to form a plurality of congruent rings, each ring lying in a plane parallel to the planes of all other rings of such bead ring assembly, transitions from each ring to an adjacent ring being oblique to said planes and within a common zone for all such transitions.

14. The method for building a tire according to Claim 10, wherein said carcass ply is engaged between lateral edges of said first and second bead ring assemblies.

15. The method for building a tire according to Claim 14, wherein said carcass ply end is further turned over onto itself, said carcass ply end being secured to said carcass ply by an inner circumferential surface of said second bead ring assembly.

FIG. 1

FIG. 7B

FIG. 2

FIG. 7A

FIG. 4

FIG. 3B

FIG. 3A

FIG.5A

FIG.5B

FIG.5C

FIG.5D

FIG.5E

FIG.5F

FIG.6A

FIG.6B

FIG.6C

FIG.6D

FIG.6E

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | EP - A1 - 0 168 754 (MICHELIN & CIE) * Fig. 2 * -- | 1,7, 10,14 | B 60 C 15/05 B 29 D 30/32 |
| A | DE - A1 - 2 936 337 (CONTINENTAL GUMMI-WERKE AG) * Page 3, paragraphs 1,2 * -- | 1,10 | |
| A | EP - A2/A3 - 0 251 980 (THE GOODYEAR TIRE & RUBBER COMPANY) * Fig. 3 * -- | 1,10 | |
| A | GB - A - 2 212 459 (HOLROYD ASSOCIATES LIMITED) * Fig. 5 * -- | 1,10 | |
| A | EP - A1 - 0 283 423 (THE GOODYEAR TIRE & RUBBER COMPANY) * Abstract; fig. 5 * ---- | | |

TECHNICAL FIELDS SEARCHED (Int. Cl.5)

B 60 C
B 29 D
B 21 F

The present search report has been drawn up for all claims

| Place of search | Date of completion of the search | Examiner |
|---|---|---|
| VIENNA | 24-10-1991 | WIDHALM |

EPO FORM 1503 03.82 (P0401)